Europäisches Patentamt

European Patent Office

Office européen des brevets

(11) Veröffentlichungsnummer: **0 297 478**

**A1**

# EUROPÄISCHE PATENTANMELDUNG

(21) Anmeldenummer: **88110191.9**

(22) Anmeldetag: **27.06.88**

(51) Int. Cl.4: **F16L 59/00**

(30) Priorität: **27.06.87 DE 3721284**

(43) Veröffentlichungstag der Anmeldung:
**04.01.89 Patentblatt 89/01**

(84) Benannte Vertragsstaaten:
**FR GB IT SE**

(71) Anmelder: **Nuessel, Herbert G.P., Dipl. Ing. (TH)**
**Neuenreuth 10**
**D-8587 Creussen(DE)**

(72) Erfinder: **Nuessel, Herbert G.P., Dipl. Ing. (TH)**
**Neuenreuth 10**
**D-8587 Creussen(DE)**

(74) Vertreter: **Beil, Hans Christoph, Dr. et al**
**Beil, Wolff und Beil Rechtsanwälte**
**Adelonstrasse 58**
**D-6230 Frankfurt am Main 80(DE)**

(54) **Isolierender Wandaufbau für Reaktionskammern und dergleichen.**

(57) Isolierender Wandaufbau für Reaktionskammern und dergleichen, bestehend aus einem Tragewerk (1) konventioneller Gestaltung, das einerseits die Reaktorkammerwand (2) und andererseits die Aussenwand bildende Dämmelemente trägt. Die innere Wand bedarf regelmässig keiner zusätzlichen Aussteifung. Die Dämmelemente bestehen aus einer ein-oder mehrschichtigen Isolierschicht (3) aus formbeständigem Material, das zwischen zwei Blechen angeordnet und mit diesen fest verbunden ist. Die Ränder dieses biegesteifen Dämmelements sind stufen- oder Z-förmig gestaltet, wobei die Ausgestaltung an zwei gegenüberliegenden Rändern jeweils parallel verläuft. Das Aussenblech (4) des Dämmelements steht an zwei nebeneinanderliegenden Rändern über das Dämmelement über. Im Bereich von zwei einander gegenüberliegenden Rändern, die bei der Montage vorzugsweise vertikal angeordnet sind, befindet sich auf der einen Seite ein Rundloch (6) und der anderen Seite ein Langloch (7). In diese Löcher greifen am Tragewerk angebrachte Bolzen ein. Die Befestigung auf dem Haupttragewerk erfolgt in der Weise, dass an den Kreuzstössen Gewindebolzen (8) auf dem Tragewerk (1) angeschweisst sind und mittels darauf aufgeschraubter Muttern und einer den Kreuzstossbereich überdeckenden Platte die vier Ecken der Dämmelemente an dem Tragewerk gehalten werden. Die überstehenden Blechteile an der Aussenwand des Dämmelements können eine dort befestigte Dichtschnur aufweisen oder eine Dichtschnur kann während der Montage eingelegt werden.

# ISOLIERENDER WANDAUFBAU FÜR REAKTIONSKAMMERN UND DERGLEICHEN

Die Erfindung betrifft den Gegenstand der Ansprüche.

Die Wärmedämmung im Industrieanlagenbau dient sowohl zur Vermeidung von Kondensatanfall im Inneren des Objekts durch Abfallen der Temperatur unter die Taupunktstemperatur des inneren Mediums wie auch der Verhinderung eines zu grossen Wärmeverlustes und damit der Energieeinsparung. Andere Ziele, wie z.B. Schutz gegen Verbrennungen, Schutz gegen Einfrieren, Schutz der Umgebung vor Temperaturüberbeanspruchung und gleichzeitiger Schallschutz sind Anwendungszwecke, die häufig mit dem Schutz gegen Kondensatanfall und dem Schutz gegen Abfall der Reaktionstemperaturen kombiniert sind. Die bisherigen, weltweit angewandten Wärmedämmsysteme, die bei allen heissgehenden Maschinen, Apparaten, Kanälen und Rohrleitungen im Industrie-Anlagenbau eingesetzt sind oder werden, sind sehr kostenaufwendig und weisen relativ grosse Unterschiede im Wärmedämmeffekt auf, da die Wärmeleitzahlen fertigungs-, transport-, lager- und montagebedingt stark schwanken.

Konventionell sind Reaktionskammern, Leitungen und dergleichen grösserer Dimension in der Weise aufgebaut, dass ein Tragewerk, meist in Form eines Drei-Gelenk-Rahmens, die die Reaktionsinnenwand bildende Blechkonstruktion trägt, die ihrerseits biegesteif sein muss und deshalb an ihrer Aussenseite meist Aussteifungen, wie beispielsweise Winkeleisen, U-Eisen oder I-Träger aufweist.

Die Wärmedämmung erfolgt durch Vermattung der gesamten äusseren Oberfläche einschliesslich deren Versteifungen und Tragwerken mit geeigneten Isoliermaterialien. Die Matten werden durch Haltestifte und Scheiben sowie einem feinmaschigen Draht an den Oberflächen der Maschinen und Apparate und an deren Profilen der Aussteifungen und Tragwerke befestigt.

Bei der Anbringung der Matten muss darauf geachtet werden, dass sie fest an den Wänden und Profilen anliegen und an keiner Stelle übermässig zusammengepresst werden, was nicht immer zu vermeiden ist. Die Einhaltung einer exakten Dicke der Isolierung ist systembedingt und konstruktiv nicht möglich. In der Praxis erfolgt die Befestigung der Matten meist durch 5 bis 6 Haltestifte pro m². Auch an den Stegen der U- und Doppel-T-Profile, die grösser als 200 mm sind, erfolgt die Befestigung der Matten durch Haltestifte, die eben an die zu dämmenden Flächen angeschweisst werden. Das Anschweissen erfolgt soweit möglich in den Stahlbauanstalten. Vor Anbringen der Matten werden die Stifte rechtwinklig aufgebogen. Nach dem Anbringen der Matten werden Befestigungsscheiben aufgesteckt und angedrückt, wobei ein Zusammenpressen der Matten nicht gänzlich vermieden werden kann. Das Drahtgeflecht der einzelnen Matten wird mit einem Bindedraht verbunden. Für schlecht zugängliche oder unzugängliche Bereiche der zu isolierenden Raumkörper müssen lose Mineralfasern verwendet werden. Eine technisch einwandfreie Wärmedämmung ist bei losen Dämmstoffen nicht möglich, da der Wirkungsgrad vom Grad der Verarbeitung abhängig ist.

Die isolierte Reaktionskammer erhält dann eine äussere Verkleidung, die aus Blechen verschiedener Art (Glattblech, gesicktes Glattblech, diagonal gekantetes Glattblech, Trapezblech, Wellblech oder ähnliche Formen) besteht. Die auf diese Verkleidung wirkenden äusseren Kräfte (Winddruck, Windsog, Schneelast usw.) werden über eine Unterstützungskonstruktion auf die zwischen den Haupttragewerken liegende versteifte biegesteife Innenwand des Reaktors übertragen. Über diese Blechwand werden die Kräfte dann in die Haupttragewerke geleitet.

Die Unterstützungskonstruktion hängt im Detail von der Art der Verkleidung ab (diagonal gekantete Bleche, Profilbleche wie Trapezbleche, Glattbleche, gesickte Bleche)und besteht im Prinzip aus Stützprofilen und Abstandhaltern.

Als Stützprofile werden U-Profile oder U-förmig gekantete Schienen verwendet. Die Abstandhalter können Flachstähle oder Winkelstähle sein. Die Abstandhalter werden auf die Grundkonstruktion der zu dämmenden Anlagenteile aufgeschweisst. Meistens müssen die Schweißstellen nachgestrichen werden.

Die Aussenverkleidung von der Unterstützungskonstruktion durch eine isolierende Zwischenlage aus geeignetem Material getrennt werden, um Wärmebrücken zu vermeiden bzw. den negativen Einfluss der Wärmebrücken zu reduzieren und Kontaktkorrosionen auszuschliessen, wie sie bei gleichzeitiger Anwendung verschiedener Metalle auftreten können.

Die Verkleidungsbleche werden meist mit Blechschrauben auf den Stützprofilen befestigt. Unverlierbare Dichtscheiben und aufvulkanisierte Dichtungen sind daher unerlässlich.

Für Abdichtung der Stoßstellen der Verkleidungsbleche sind entsprechende Dichtungen erforderlich.

Mit diesem konventionellen System sind erhebliche Nachteile verbunden, wie sich aus der vorstehenden Schilderung ergibt. Die Anbringung der Isolierung ist sowohl sehr arbeitsaufwendig,wie auch das Ergebnis in erheblichem Umfange von der Sorgfalt der die Arbeiten ausführenden Monteure abhängt. Eine Vorfertigung in der Werkstatt ist nahezu unmöglich. Diese und andere Nachteile der konventionellen Wärmedämmung werden durch den erfindungsgemässen Wandaufbau vermieden, der eine Vorfertigung der Dämmelemente in der Werkstatt erlaubt und damit die reine Arbeitszeit auf der Baustelle wesentlich verringert und zugleich eine wesentlich gleichmässigere Wärmedämmung ermöglicht.

Erfindungsgemäss umfasst der Wandaufbau ein Tragewerk konventioneller Gestaltung, das einerseits die Innenwand und andererseits die die Aussenwand bildenden Dämmelemente trägt, wobei diese Elemente aus einer zwischen zwei Blechen angeordneten und mit ihnen fest verbundenen Schicht eines isolierenden Materials bestehen. Die Dämmelemente werden insbesondere in Form von Einzelelementen eingesetzt, die in ihrer horizontalen Dimension dem horizontalen Abstand der tragenden Konstruktionsteile angepasst sind und zur Verhinderung von Wärmebrücken einerseits mit stufenförmigen Kanten versehen sind und andererseits zur Erzielung einer dichten Aussenhaut über die Kanten hinausragende und gegebenenfalls mit zusätzlichen Abdichtungsmitteln versehene Überstände des äusseren Blechs aufweisen. Die Montage der einzelnen Dämmelemente wird dadurch erleichtert, dass die Elemente an dem einen bei der Montage vertikal verlaufenden Rand ein Rundloch und an dem gegenüberliegenden Rand ein Langloch aufweisen, in die auf der Tragekonstruktion angebrachte Bolzen eingreifen. An dem Punkt, an dem vier solcher Dämmelemente auf dem Tragewerk zusammenstossen, erfolgt die Befestigung an der Tragekonstruktion und zwar vorzugsweise dergestalt, dass an der Tragekonstruktion dort ein Gewindebolzen aufgeschweisst ist und mittels einer darauf aufgeschraubten Mutter und mittels einer den Kreuzstossbereich der vier Elemente überdeckenden Unterlegscheibe diese Elemente an der Tragekonstruktion festgehalten werden.

Anhand der beigefügten Zeichnungen wird die Erfindung näher erläutert. Dabei sind

Fig. 1 ein horizontaler Schnitt durch einen erfindungsgemässen Wandaufbau mit senkrechten Tragewerkteilen

Fig. 2 eine Draufsicht mit dem Kreuzstoss von vier Dämmelementen

Fig. 3 ein Schnitt entlang der Linie A-B der Fig. 3

Fig. 4 ein Schnitt entlang der Linie C-D der Fig. 3

Fig. 5 die vergrösserte Darstellung des Details A aus Fig. 4.

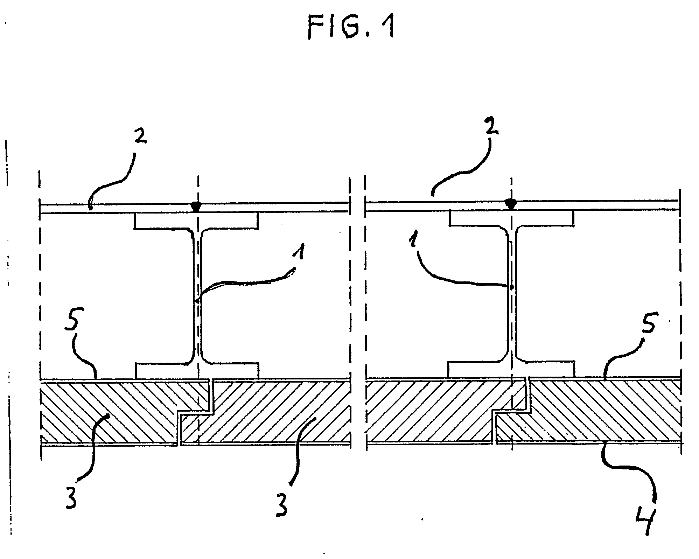

Eine erfindungsgemäss aufgebaute Reaktorkammer besteht, wie Fig. 1 zeigt, aus einem Tragewerk (1) konventioneller Art. An seiner Innenseite trägt es die Reaktorwand (2) aus Blech, die keiner Aussteifung bedarf, da sie nur den inneren über- oder Unterdruck der Reaktionskammer aufnehmen muss. An der Aussenseite des Tragewerks sind die aus einer Isolierschicht (3) sowie dem inneren Blech (5) und dem Aussenblech (4) bestehenden Dämmelemente befestigt. Die Isolierschicht kann ein- oder mehrschichtig sein und aus jedem für den vorgesehenen Einsatzbereich geeigneten Material, das entsprechende Formbeständigkeit aufweist, bestehen.

Das die innere Deckschicht bildende Blech ist vorzugsweise glatt, während das Blech der äusseren Deckschicht glatt oder profiliert sein kann. Die Verbindung der Isolierschichten untereinander und mit den Deckschichten kann durch Verklebung erfolgen. Eine Verbindung der Isolierung mit den Deckschichten ist auch durch entsprechende Profilierung dieser Deckschichten möglich. Die Dimensionierung sowohl der Isolierschicht wie auch der statischen Festigkeit des ganzen Dämmelements richtet sich nach dem Einsatzzweck und stellt den Fachmann nicht vor Probleme. Das einzelne Dämmelement kann rechteckig oder quadratisch sein, wobei die grössere Ausdehnung rechteckiger Elemente sowohl horizontal wie vertikal verlaufen kann. Vorzugsweise in horizontaler Richtung richtet sich die Grösse der Elemente nach dem Abstand der Tragwerksteile, an denen die Befestigung erfolgen soll.

Das Randprofil der Dämmelemente ist an allen Rändern stufen-oder Z-förmig, und zwar an jeweils gegenüberliegenden Rändern parallellaufend, wie Fig. 1 zeigt. Dadurch wird sichergestellt, dass auch bei relativer Bewegung der Dämmelemente gegeneinander an den Stoßstellen eine ausreichende Isolierung aufrechterhalten bleibt.

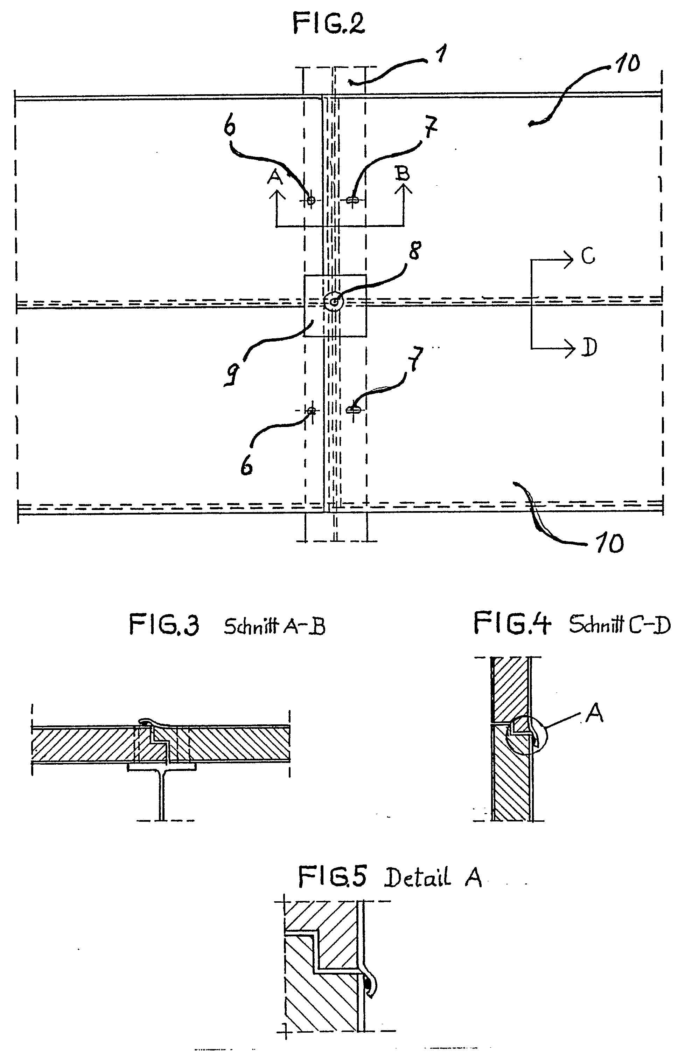

Die Befestigung der Dämmelemente zeigt Fig. 2. Die Dämmelemente (10) weisen an einer Seite ein Rundloch (6) und an der gegenüberliegenden Seite ein Langloch (7) auf. An dem Tragewerk (1) sind Bolzen angeschweisst, die in diese Löcher (6,7) eingreifen. Die endgültige Befestigung der Dämmelemente geschieht dann an deren Kreuzungspunkten. Dort ist auf das Tragewerk (1) ein Gewindebolzen (8) aufgeschweisst. Eine den Kreuzstoss überdeckende Platte (9), die mittels einer auf den Gewindebolzen aufgeschraubten Mutter gegen das Dämmelement gepresst wird, fixiert die Dämmelemente (10) dann am Tragewerk. Sowohl die in die Löcher (6, 7) eingreifenden Bolzen, die nicht gezeigt werden, wie auch die Gewindebolzen (8) können vor der Montage des Tragewerks dort, etwa in der Werkstatt, angebracht werden.

Die Ränder der einzelnen Dämmelemente weisen, wie in Fig. 3 und 4 dargestellt, ein Stufen- oder Z-Profil auf. Das äussere Blech der Dämmelemente ist dabei so gestaltet, dass das Blech eines Elements jeweils den Stoss zum nächsten Element überdeckt, wobei bei horizontalen Stössen die Überdeckung jeweils von dem oberen Element ausgeht. Die Überdeckung, deren Gestaltung in Fig. 5 im Detail gezeigt ist, kann an der Innenseite eine Dichtschnur oder dergleichen enthalten, die dort angeklebt oder in sonstiger Weise befestigt ist, oder bei der Montage eingelegt wird.

Der erfindungsgemässe Wandaufbau erlaubt eine weitgehende Vorfertigung in der Werkstatt, und zwar sowohl hinsichtlich der Tragewerkteile mit den Halte- und Schraubbolzen, als insbesondere auch der Dämmelemente, deren Montage auf der Baustelle einfach vonstatten geht und anders als das konventionelle System keinen grossen Arbeitsaufwand erfordert. Ein grosser Vorteil ist auch, dass die Wärmedämmung nicht von der Sorgfalt des einzelnen Arbeiters beim Isolieren abhängt und Schäden an der Isolation, insbesondere durch äussere Einwirkung, durch Austausch der beschädigten Elemente leicht zu beseitigen sind.

**Ansprüche**

1. Isolierender Wandaufbau für Reaktionskammern und dergleichen, bestehend aus

1. einer glatten Innenwand aus Blech

2. einer diese Innenwand tragenden Konstruktion und

3. einer an dieser Konstruktion befestigten Aussenwand, dadurch gekennzeichnet, dass

3.1 die Aussenwand aus einzelnen, vorfertigbaren Wandelementen besteht, die ihrerseits

3.2 aus einer aus Blech bestehenden Innenschicht,

3.3 einer aus glattem oder profilierten Blech bestehenden Aussenschicht und

3.4 einer zwischen beiden Schichten angeordneten und fest mit ihnen verbundenen Schicht eines Isoliermaterials gebildet werden.

2. Wandaufbau nach Anspruch 1 **dadurch gekennzeichnet,** dass die Wandelemente stufen- oder Z-förmige Ränder aufweisen und das Blech der Aussenschicht an zwei Seiten über die Isolier- und Innenschicht übersteht.

3. Wandaufbau nach Anspruch 1 - 2, **dadurch gekennzeichnet,** dass die Wandelemente in ihrer Dimension dem horizontalen Abstand der tragenden Konstruktionsteile angepasst sind.

4. Wandaufbau nach Anspruch 1 - 3, **dadurch gekennzeichnet,** dass die Wandelemente zur Befestigung an der tragenden Konstruktion in der Nähe einer Kante ein Langloch und in der Nähe der gegenüberliegenden Kante ein Rundloch aufweisen, wobei diese Kanten bei der Montage der Wandelemente vertikal verlaufen.

5. Wandaufbau nach Anspruch 1 - 4, **dadurch gekennzeichnet,** dass die tragende Konstruktion Bolzen aufweist, die in die Lang- und Rundlöcher der Wandelemente eingreifen.

6. Wandaufbau nach Anspruch 1 - 5, **dadurch gekennzeichnet,** dass die Wandelemente an ihrem Kreuzstoss an der tragenden Konstruktion befestigt sind.

7. Wandaufbau nach Anspruch 1 - 6, **dadurch gekennzeichnet,** dass zur Befestigung der Wandelemente an der tragenden Konstruktion an den Kreuzstosspunkten Gewindebolzen angeschweisst sind und die Platten an ihrem Kreuzstoss durch eine den Eckbereich überdeckende Montageplatte mittels einer auf den Gewindebolzen aufgeschraubten Mutter gehalten werden.

8. Wandaufbau nach Anspruch 1 - 7, **dadurch gekennzeichnet,** dass in die Stösse der Elemente eine Dichtschnur eingeklebt oder eingelegt ist und/oder an den überstehenden Blechteilen der Aussenschicht eine Dichtschnur befestigt ist oder bei der Montage eingelegt wird.

## FIG. 1

FIG.2

FIG.3  Schnitt A-B

FIG.4  Schnitt C-D

A

FIG.5  Detail A

Europäisches Patentamt

EUROPÄISCHER RECHERCHENBERICHT

Nummer der Anmeldung

EP 88 11 0191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | US-A-2 896 271 (KLOOTE et al.) <br> * Figuren 3, 5 * | 1 | F 16 L 59/00 |
| A |  | 2-6 |  |
|  | --- |  |  |
| X | GB-A- 948 206 (CONCH INT. METHANE LTD.) <br> * Anspruch 1, Figur 1 * | 1 |  |
| A |  | 3-6 |  |
|  | --- |  |  |
| A | US-A-3 112 043 (TUCKER) <br> * Figuren 2, 3 * | 1 |  |
|  | --- |  |  |
| A | US-A-3 319 431 (CLARKE et al.) <br> * Figur 2 * | 1 |  |
|  | --- |  |  |
| A | US-A-3 243 931 (BECHERER) <br> * Figur 4 * | 1 |  |
|  | ----- |  |  |

RECHERCHIERTE SACHGEBIETE (Int. Cl.3)

F 16 L 59/00
B 65 D 88/00
B 65 D 90/00

Der vorliegende Recherchenbericht wurde für alle Patentansprüche erstellt

| Recherchenort | Abschlußdatum der Recherche | Prüfer |
|---|---|---|
| BERLIN | 20-09-1988 | SCHAEFFLER C.A.A. |